# EUROPEAN PATENT SPECIFICATION

(11) **EP 0 310 442 B1**
(45) Date of publication and mention of the grant of the patent: **15.02.1995**
(21) Application number: 88309145.6
(22) Date of filing: 30.09.1988
(51) Int. Cl.: G11B 20/14, G11B 20/10

(54) **Digital data reproducing apparatus**
Gerät zur Wiedergabe von digitalen Daten
Appareil de reproduction de données numériques

(30) Priority: 30.09.1987 JP 246916/87
(43) Date of publication of application: 05.04.1989
(73) Proprietor: SONY CORPORATION, Tokyo 141 (JP)
(72) Inventor: Murabayashi, Noboru c/o Patents Division, Shinagawa-ku Tokyo 141 (JP); Kanota, Keiji c/o Patents Division, Shinagawa-ku Tokyo 141 (JP)
(74) Representative: Thomas, Christopher Hugo

(56) References cited:
- DE-A- 2 723 485
- DE-A- 3 046 660
- US-A- 3 705 398
- US-A- 4 363 040
- US-A- 4 672 597
- IEEE TRANSACTIONS ON INSTRUMENTATION AND MEASUREMENT. vol. IM-24, no. 3,September 1975, NEW YORK US pages 266 - 271; C.A.CASTLE: "HIGH-DENSITY PCM TAPERECORDING"
- ELECTRONICS LETTERS. vol. 17, no. 3, 5 February 1981, ENAGE GB pages 117 - 119;J.ISAILOVIC: "REALISATION ODF A DECODER FOR TWO MFM CODES"
- RADIO FERNSEHEN ELEKTRONIK. vol. 29, no. 2, 1980, BERLIN DD pages 80 - 82; D.WEISE ET AL: "DEMODULATIONSVERFAHREN FÜR MAGNETSCHICHTSPEICHER MIT HOHENSPEICHERDICHTEN"
- IBM TECHNICAL DISCLOSURE BULLETIN. vol. 20, no. 8, January 1978, NEW YORK USpages 3255 - 3258; J.F.HOLSTEEN JR.: "MAGNETIC DISK FILE DATA SYNCHRONIZINGCIRCUIT"

## Description

This invention relates to digital data reproducing apparatus particularly, but not exclusively, for reproducing digital data recorded on a magnetic tape using, for example, bi-phase mark modulation or an 8 to 10 block code modulation.

It has been proposed, in a video tape recorder (VTR) of an 8-mm video system, for example, to pulse code modulation (PCM) encode an audio signal, time compress the encoded signal, modulate the resulting signal using bi-phase mark modulation, and then record the resulting signal in an audio track associated with a video track (see US patent specification US-A-4 551 771).

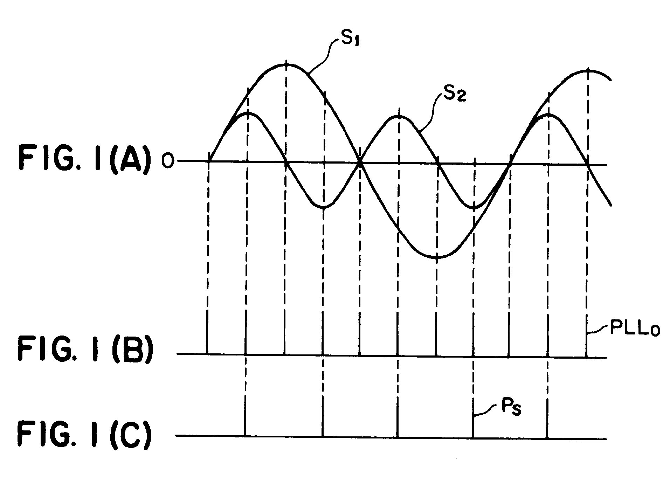

Bi-phase mark modulation is a modulating method for digital data to be recorded on a magnetic tape, in which carrier signals S1 and S2, for example, of frequencies f1 (2.9 MHz) and f2 (5.8 MHz) as shown in Figure 1(A), are provided having a phase relationship such that their zero-crossing points coincide with each other. For example, the carrier signal S1 of the lower frequency f1 is recorded on a magnetic tape when, for example, a PCM audio signal is logical "L", while the carrier signal S2 of the higher frequency f2 is recorded when the PCM audio signal is logical "H".

Then, when an audio signal recorded in the audio track TR_{AD} is to be reproduced, zero-crossing points of the picked up carrier signal S1 or S2 are first detected as shown in Figure 1(B), and then pulse outputs PLL₀ are generated using a sampling pulse oscillator comprising, for example, a phase locked loop (PLL), the pulse outputs PLL₀ of which have a 45° phase angle with respect to the carrier signal S1 of the lower frequency f1, and a 90° phase angle with respect to the carrier signal S2 of the higher frequency f2.

Of the pulse outputs PLL₀, those appearing at the phase angles of 45°, 135°, 225° and 315° relative to the carrier signal S1 are used as sampling pulses PS (Figure 1(C)) and sampling is effected using these pulses. If, as a result of the sampling, positive values are obtained at every alternate two samplings, the reproduced data are determined to be of a logical "L".

Of the pulse outputs PLL₀, those appearing at the phase angles of 90° and 270° relative to the carrier signal S2 are used as sampling pulses PS (Figure 1(C)) and sampling is effected using these pulses. If, as a result of the sampling, a positive value is obtained at alternate samplings, the reproduced data are determined to be of a logical "H".

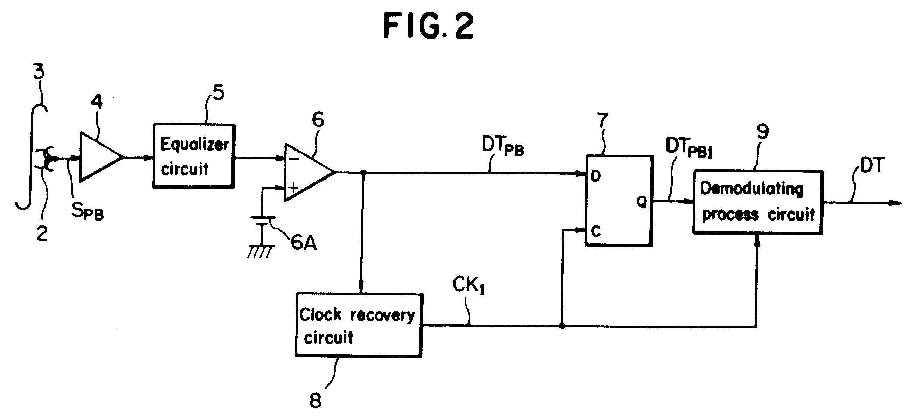

The digital data reproducing apparatus for reproducing the audio data recorded in the audio track using bi-phase mark modulation is arranged, as shown in Figure 2, such that a recovered clock signal CK₁ is extracted from a reproduced carrier signal S_{PB} picked up by a magnetic head 2 from a magnetic tape 3, the signal CK₁ having a repetition frequency included in the signal S_{PB}, and the reproduced carrier signal S_{PB} (DT_{PB1}) is demodulated based on the recovered clock signal CK₁.

That is, a reproduced carrier signal S_{PB} obtained when the head 2 scans the video track on the tape 3 is supplied through, for example, a switching circuit (not shown) to a specific video signal processing circuit (not shown) and an automatic track finding (ATF) circuit (not shown), and on the other hand, the reproduced carrier signal S_{PB} obtained when the head 2 scans the audio track on the tape 3 is supplied through a reproducing amplifier 4 to an equalizer circuit 5, which performs a specific equalizing process, and the equalized signal is supplied to the inverting input terminal of a comparator 6 comprising an operational amplifier.

The non-inverting input terminal of the comparator 6 is connected to a power source 6A providing a predetermined reference voltage V_{REF}, and thus, the comparator 6 compares the reproduced carrier signal S_{PB} with the reference voltage V_{REF}, and supplies the reproduced digital signal DT_{PB} obtained as a result of the comparison to an input terminal D of a synchronizing circuit 7 of a D flip-flop structure, and to a clock recovery circuit 8 including a PLL circuit.

The clock recovering circuit 8 functions to compare the phase of a reference signal with a predetermined frequency obtained from a voltage-controlled oscillator (VCO) incorporated therein, with the phase of the clock component having a predetermined repetition frequency included in the input reproduced digital signal DT_{PB}, and thereby obtains the recovered clock signal CK₁ precisely phase-locked to the clock component. The recovered clock signal CK₁ is supplied to the clock input terminal C of the synchronizing circuit 7, and also to a demodulating process circuit 9.

In this way, the synchronizing circuit 7 synchronizes the reproduced digital signal DT_{PB} with the recovered clock signal CK₁, and supplies the synchronized digital signal DT_{PB1} to the subsequent demodulating process circuit 9, which demodulates the digital signal DT_{PB1} based on the recovered clock signal CK₁.

Recently, for recording audio signals in an 8-mm VTR using other than the above described bi-phase mark modulation (hereinafter to be referred to as "first record modulation"), a system as used, for example, in a rotary head digital audio tape recorder (R-DAT) has been proposed. According to this system, as disclosed in US patent specifications US-A-4 617 552 and US-A-4 577 180, when PCM encoding an audio signal, the audio signal is encoded with a much higher recording density than that in the first record modulation, and the coded signal is then 8 to 10 block code modulated (hereinafter to be referred to as "second record modulation") and recorded in the audio track.

In practice, however, the frequency band widths of the recorded signals of the first and second record modulation modes are quite different, and moreover, the frequencies of the sampling clock are greatly different. That is, for example, the frequency in the first record modulation is 11.6 MHz, while that in the second modulation is 14.8 MHz, and thus the Nyquist conditions in the electromagnetic conversion systems and the noise spectrum distributions suffer considerable changes.

For these reasons, in order that the data recorded in the first or the second record modulation mode may be reproduced from a magnetic tape, it is preferred that the digital reproducing apparatus be provided with a first and a second equalizer circuit having equalizing characteristics adapted for their respective record modulation modes, and demodulating means adapted for their respective record modulation modes, wherein the mode of the record modulation used for making the record on the tape 3 may be detected in some way, and the first or the second equalizer circuit, and the first or the second demodulating process circuit may be selectively used according to the result of the detection.

German patent specification DE-A-2 723 485 (=GB-1 585 579) discloses a circuit for discriminatory reading of data prerecorded using one of two different codes on a magnetic medium. The features of the circuit are similar to the precharacterizing part of claim 1.

According to one aspect of the present invention there is provided digital data reproducing apparatus, comprising:
a magnetic head and a reproducing amplifier connected in series for deriving a digital signal from a magnetic recording medium;
a clock recovery circuit supplied with said digital signal for generating a recovery clock signal;
demodulating means supplied with said digital signal and said recovered clock signal for deriving demodulated digital data from said digital signal;
detecting means, including reference signal generating means, for generating a mode control signal representing a mode of record modulation of said digital signal; and
control means for controlling operating modes of said demodulating means based on said mode control signal;
characterised in that:
said detecting means includes frequency comparison means, wherein the frequency of said recovered clock signal is compared with the frequency of said reference signal generated by said reference signal generating means at said frequency comparison means, said mode control signal being generated in response to the existence of a beat component in the output of said frequency comparison means;
said demodulating means comprises two demodulators corresponding respectively to different modes of record modulation of said digital signal having different recording densities;
said control means selects one of said demodulators in response to said mode control signal; and in that
the apparatus includes equalizing means, connected between said reproducing amplifier and said clock recovery circuit, to which said mode control signal is also supplied in order to adjust equalizing characteristics for said digital signal based on said mode control signal.

According to another aspect of the present invention there is provided digital data reproducing apparatus, comprising:
a magnetic head and a reproducing amplifier connected in series for deriving a digital signal from a magnetic recording medium;
a clock recovery circuit supplied with said digital signal for generating a recovered clock signal;
demodulating means supplied with said digital signal and said recovered clock signal for deriving demodulated digital data from said digital signal;
detecting means for generating a mode control signal representing a mode of record modulation of said digital signal; and
control means for controlling operating modes of said demodulating means based on said mode control signal;
characterised in that:
said detecting means includes a reference voltage source, a frequency-to-voltage conversion means supplied with said recovered clock signal, and voltage comparison means, wherein the output voltage representing the frequency of said recovered clock signal is compared with said reference voltage at said voltage comparison means, said mode control signal being generated in response to the output of the frequency comparison means;
said demodulating means comprises two demodulators corresponding respectively to different modes of record modulation of said digital signal having different recording densities;
said control means selects one of said demodulators in response to said mode control signal; and in that
the apparatus includes equalizing means, connected between said reproducing amplifier and said clock recovery circuit, to which said mode control signal is also supplied in order to adjust equalizing characteristics for said digital signal based on said mode control signal.

The invention will now be described by way of example with reference to the accompanying drawings, throughout which like parts are referred to by like references, and in which:
Figures 1(A), 1(B) and 1(C) are waveform charts for explaining bi-phase mark modulation;
Figure 2 is a block diagram showing a previously proposed digital data reproducing apparatus;
Figures 3 and 4 are block diagrams showing first and second embodiments of the present invention; and
Figure 5 is a characteristic diagram showing a characteristic of a frequency-to voltage conversion circuit.

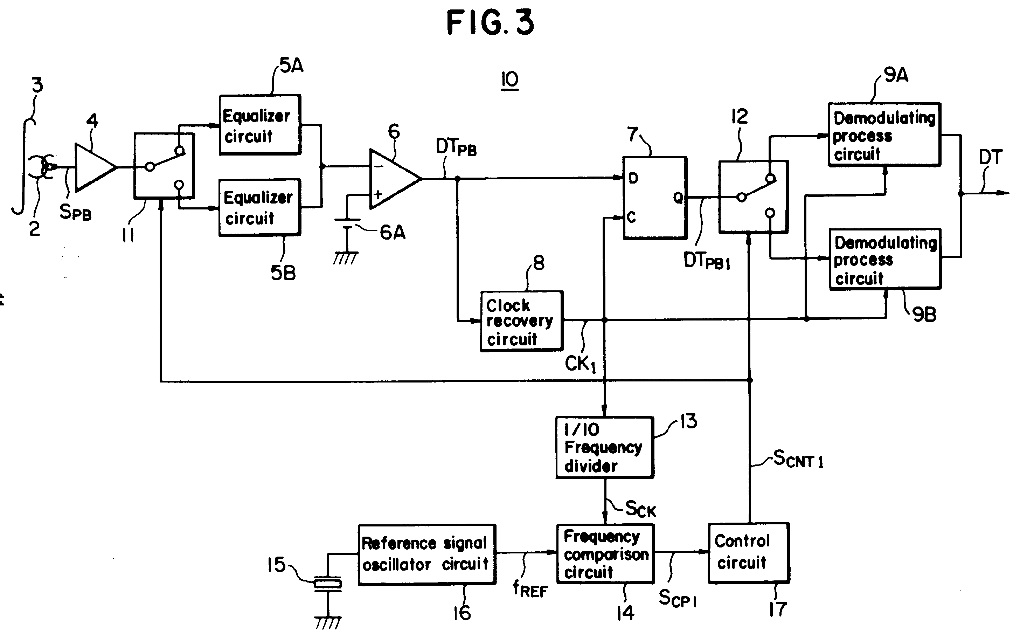

Referring to Figure 3, in a first embodiment of digital data reproducing apparatus 10 according to the present invention, a picked up output S_{PB} obtained from a magnetic head 2 is supplied through a reproducing amplifier 4 to an input terminal of a first switching circuit 11.

The first switching circuit 11 is formed, for example, as an analogue switch structure and changes over the incoming picked up output S_{PB}, based on a control signal S_{CNT1} supplied by a control circuit 17, either to a first equalizer circuit 5A having an equalizing characteristic adapted for the first record modulation mode to be then supplied to a comparator 6, or to a second equalizer circuit 5B having an equalizing characteristic adapted for the second record modulation mode to be then supplied to the comparator 6.

In addition to the above, the reproduced digital signal DT_{PB1} obtained from a synchronizing circuit 7 is supplied to a second switching circuit 12. The second switching circuit 12 is formed, for example, as an analogue switch structure, and changes over the incoming reproduced digital signal DT_{PB1}, based on the control signal S_{CNT1} supplied by the control circuit 17, either to a first demodulating process circuit 9A for performing a demodulating process adapted for the first record demodulation or to a second demodulating process circuit 9B for performing a demodulating process adapted for the second record demodulation.

A recovered clock signal CK₁ obtained from a clock recovery circuit 8 is supplied to the clock terminal C of the synchronizing circuit 7, the first and the second demodulating process circuits 9A and 9B, and a 1/10 frequency divider 13, which divides the frequency of the clock signal by ten, for supply to a frequency comparison circuit 14 including a multiplier and a low-pass filter.

The frequency comparison circuit 14 is further supplied with a reference frequency signal f_{REF} from a reference signal oscillator circuit 16 comprising a quartz crystal 15. Thus, the frequency comparison circuit 14 compares the signal S_{CK} produced by dividing the frequency of the recovered clock signal CK₁ by ten, with the reference frequency signal f_{REF}, and, when the frequencies of these signals are not in agreement, supplies a compared output S_{CP1} including a beat component to the control circuit 17.

In this embodiment, the quartz crystal 15 generates, for example, a frequency of 1.16 MHz corresponding to 1/10 of the frequency 11.6 MHz of the recovered clock signal CK₁, where the record has been made by the first record modulation mode. Thus, during reproduction, the control circuit 17 tries to detect the existence of any beat component in the compared output S_{CP1} obtained from the frequency comparison circuit 14, and upon detecting no such beat component, determines that the digital data have been recorded on the tape 3 by the first record modulation. Hence, it supplies a control signal S_{CNT1} to the first and the second switching circuits 11 and 12, for enabling them to select the first equalizer circuit 5A and the first demodulating process circuit 9A, respectively.

Or, upon detecting a beat component in the compared output S_{CP1}, the control circuit 17 determines that the digital data have been recorded on the tape 3 by the second record modulation, so it supplies a control signal S_{CNT1} to the first and the second switching circuits 11 and 12, for enabling them to select the second equalizer circuit 5B and the second demodulating process circuit 9B, respectively.

The detecting means consisting of the 1/10 frequency divider 13, the frequency comparison circuit 14, the quartz crystal 15, the reference frequency oscillator circuit 16, and the control circuit 17 identifies the frequency of the recovered clock signal CK₁, and thereby determines which of the first and the second record modulation modes has been used.

The described arrangement provides a digital data reproducing apparatus capable of easily detecting whether the first record demodulation or the second record demodulation has been used, based on the presence or absence of a beat component in the result of the comparison of the frequency of the recovered clock signal, and the frequency of the reference frequency signal.

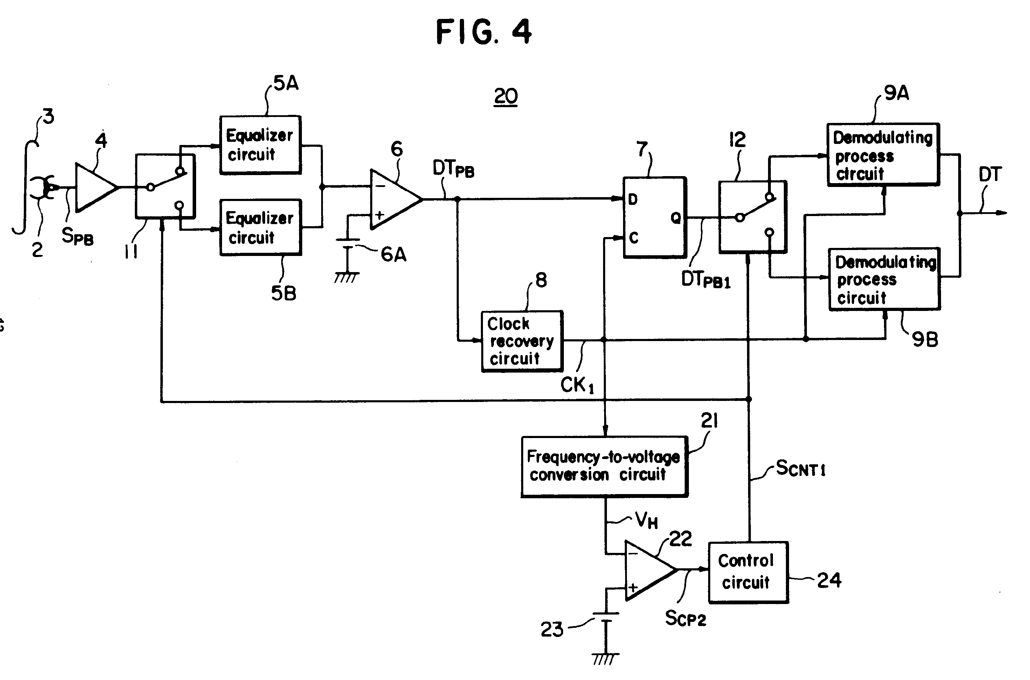

Referring to Figure 4, in a second embodiment of digital data reproducing apparatus 20 according to the present invention, a recovered clock signal CK₁ obtained from a clock recovery circuit 8 is supplied to a synchronizing circuit 7, and a first and a second demodulating process circuit 9A and 9B, as well as to a frequency-to-voltage conversion circuit 21.

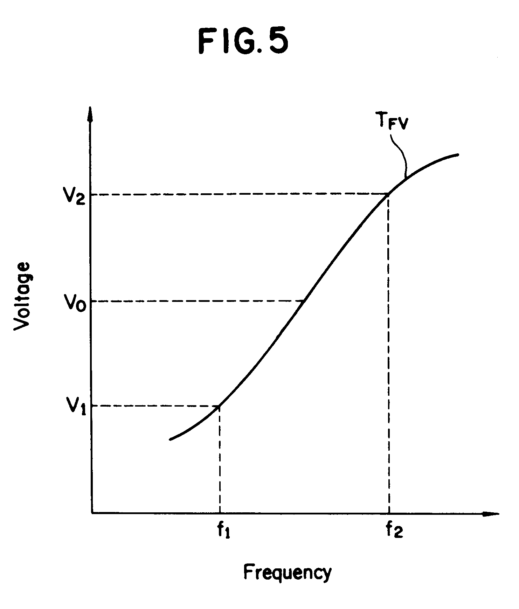

The conversion circuit 21, which has a frequency-to-voltage conversion characteristic T_{FV} as shown in Figure 5, converts the incoming recovered clock signal CK₁ to a voltage V_{H} to be compared and corresponding to its frequency, and supplies the voltage V_{H} to the inverting input terminal of a comparison circuit 22 comprising an operational amplifier.

The non-inverting input terminal of the comparison circuit 22 is earthed through a voltage source 23 supplying a predetermined reference voltage V_{REF1}. In this embodiment, the reference voltage V_{REF1} is set to a voltage V₀ located, on the conversion characteristic T_{FV}, in the middle of the voltage V₁ corresponding to the frequency f1 (= 11.6 MHz) of the recovered clock signal CK₁ in the case of the first record mdoulation, and the voltage V₂ corresponding to the frequency f2 (= 14.8 MHz) of the recovered clock signal CK₁ in the case of the second record modulation.

Thus, the comparison circuit 22 supplies a control circuit 24 with a compared output S_{CP2}, which has a logical level "H" when the incoming voltage V_{H} is lower than the reference voltage V_{REF1} (that is, when the voltage V_{H} is the voltage V₁ corresponding to the frequency f1 of the recovered clock signal CK₁ in the case of the first record modulation) or has a logical level "L" when the incoming voltage V_{H} is higher than the reference voltage V_{REF1} (that is, when the voltage V_{H} is the voltage V₂ corresponding to the frequency f2 of the recovered clock signal CK₁ in the case of the second record modulation).

In this way, the control circuit 24, operating in dependence on the logical level of the compared output S_{CP2} obtained from the comparison circuit 22, determines, if the compared output S_{CP2} has a logical level "H", that the digital data have been recorded on the tape 3 using the first record modulation, and hence it supplies a control signal S_{CNT1} to the first and the second switching circuits 11 and 12 for enabling them to select the first equalizer circuit 5A and the first demodulating process circuit 9A, respectively.

Or, if the compared output S_{CP2} has a logical level "L", the control circuit 24 determines that the digital data have been recorded on the tape 3 using the second record modulation, and hence it supplies a control signal S_{CNT1} to the first and the second switching circuits 11 and 12, for enabling them to select the second equalizer circuit 5B and the second demodulating process circuit 9B, respectively.

The detecting means comprising the frequency-to-voltage conversion circuit 21, the comparison circuit 22, the voltage source 23, and the control circuit 24 identifies the frequency of the recovered clock signal CK₁, and thereby determines which of the first and the second record modulation modes has been used.

The described arrangement provides a digital data reproducing apparatus capable of easily detecting whether the first or the second record demodulation has been used based on the logical level of the output provided as the result of comparison of the voltage obtained from the recovered clock signal by frequency-to-voltage conversion, with the predetermined reference voltage.

Moreover, with the described arrangement, since the recovered clock signal is converted into a voltage, the signal-to-noise ratio can be much improved. Thus, embodiments of the invention can have an advantage over the arrangement of Figure 3 in regard to accuracy in detection.

In this first embodiment described above, the frequency of the recovered clock signal is divided by ten, and this divided frequency is compared with a reference frequency signal whose frequency is 1/10 the frequency of the recovery clock signal in the first or the second record modulation. Other frequency dividing ratios can of course be used. That is, by dividing the recovered clock signal by n and comparing the divided signal with a reference frequency signal whose frequency is 1/n times the frequency of the first or the second recovery clock signal, a similar effect can be obtained.

In the above embodiments, bi-phase mark modulation and the 8 to 10 modulation were used as the record modulation methods, but the invention can be applied to the reproduction of digital data from a magnetic tape in which the digital data are recorded using a plurality of record modulation methods resulting in different recording densities.

In the above embodiments, the audio signal system of 8-mm VTR was mentioned, but the invention can be widely applied to digital data reproducing apparatus for reproducing digital data in the video signal system of VTRs for digital recording and in R-DATs.

Moreover, the magnetic recording media to which the present invention is applicable are not limited to magnetic tapes, and the invention can be used with other magnetic recording media such as magnetic disc devices.

By arranging such that the equalizing characteristics and the demodulation systems are switched over as required based on the result of the aforesaid detection embodiments of digital data reproducing apparatus capable of commonly handling magnetic recording media with data recorded using different modulation methods can be easily realized.

## Claims

1. Digital data reproducing apparatus (10), comprising:
a magnetic head (3) and a reproducing amplifier (4) connected in series for deriving a digital signal from a magnetic recording medium (3);
a clock recovery circuit (8) supplied with said digital signal for generating a recovered clock signal;
demodulating means (9) supplied with said digital signal and said recovered clock signal for deriving demodulated digital data from said digital signal;
detecting means (13 to 17), including reference signal generating means (15, 16), for generating a mode control signal representing a mode of record modulation of said digital signal; and
control means (12) for controlling operating modes of said demodulating means (9) based on said mode control signal;
characterised in that:
said detecting means (13 to 17) includes frequency comparison means (14), wherein the frequency of said recovered clock signal is compared with the frequency of said reference signal generated by said reference signal generating means (15, 16) at said frequency comparison means (14), said mode control signal being generated in response to the existence of a beat component in the output of said frequency comparison means (14);
said demodulating means (9) comprises two demodulators (9A, 9B) corresponding respectively to different modes of record modulation of said digital signal having different recording densities;
said control means (12) selects one of said demodulators (9A, 9B) in response to said mode control signal; and in that
the apparatus includes equalizing means (5A, 5B), connected between said reproducing amplifier (4) and said clock recovery circuit (8), to which said mode control signal is also supplied in order to adjust equalizing characteristics for said digital signal based on said mode control signal.

2. Digital data reproducing apparatus (10), comprising:
a magnetic head (3) and a reproducing amplifier (4) connected in series for deriving a digital signal from a magnetic recording medium (3);
a clock recovery circuit (8) supplied with said digital signal for generating a recovered clock signal;
demodulating means (9) supplied with said digital signal and said recovered clock signal for deriving demodulated digital data from said digital signal;
detecting means (13 to 17) for generating a mode control signal representing a mode of record modulation of said digital signal; and
control means (12) for controlling operating modes of said demodulating means (9) based on said mode control signal;
characterised in that:
said detecting means (21 to 24) includes a reference voltage source (23), a frequency-to-voltage conversion means (21) supplied with said recovered clock signal, and voltage comparison means (22), wherein the output voltage representing the frequency of said recovered clock signal is compared with said reference voltage at said voltage comparison means (22), said mode control signal being generated in response to the output of the frequency comparison means;
said demodulating means (9) comprises two demodulators (9A, 9B) corresponding respectively to different modes of record modulation of said digital signal having different recording densities;
said control means (12) selects one of said demodulators (9A, 9B) in response to said mode control signal; and in that
the apparatus includes equalizing means (5A, 5B), connected between said reproducing amplifier (4) and said clock recovery circuit (8), to which said mode control signal is also supplied in order to adjust equalizing characteristics for said digital signal based on said mode control signal.

## Patentansprüche

1. Digitale Datenwiedergabevorrichtung (10), mit:
einem Magnetkopf (3) und einem Wiedergabeverstärker (4), die seriell verbunden sind zur Herleitung eines digitalen Signals von einem magnetischen Aufzeichnungsmedium (3);
einer Taktwiedergewinnungsschaltung (8), die mit dem digitalen Signal beliefert wird, um ein wiedergewonnenes Taktsignal zu erzeugen;
einer Demodulationseinrichtung (9), die mit dem digitalen Signal und dem wiedergewonnenen Taktsignal beliefert wird, um demodulierte digitale Daten aus dem digitalen Signal herzuleiten;
einer Ermittlungseinrichtung (13 - 17), die eine Referenzsignal-Erzeugungseinrichtung (15, 16) zur Erzeugung eines Modus-Steuersignals aufweist, das einen Aufzeichnungs-Modulationsmodus des digitalen Signals darstellt; und
einer Steuereinrichtung (12) zur Steuerung der Betriebsmoden der Demodulationseinrichtung (9) auf der Grundlage dieses Modus-Steuersignals;
dadurch gekennzeichnet, daß
die Ermittlungseinrichtung (13 - 17) eine Frequenzvergleichseinrichtung (14) aufweist, wo die Frequenz des wiedergewonnenen Taktsignals mit der Frequenz des Referenzsignals verglichen wird, das durch die Referenzsignal-Erzeugungseinrichtung (15, 16) in der Frequenzvergleichseinrichtung (14) erzeugt wird, wobei das Modus-Steuersignal in Abhängigkeit von der Existenz einer Überlagerungskomponente im Ausgangssignal der Frequenzvergleichseinrichtung (14) erzeugt wird;
die Demodulationseinrichtung (9) zwei Demodulatoren (9A, 9B) aufweist entsprechend jeweils zu den verschiedenen Moden der Aufzeichnungsmodulation des digitalen Signals, das unterschiedliche Aufzeichnungsdensitäten aufweist;
die Steuereinrichtung (12) einen dieser Demodulatoren (9A, 9B) in Abhängigkeit von diesem Modus-Steuersignal auswählt; und
die Vorrichtung eine Entzerrereinrichtung (5A, 5B) aufweist, die zwischen dem Wiedergabeverstärker (4) und der Taktwiedergewinnungsschaltung (8) geschaltet ist, an die dieses Modussteuersignal ebenfalls geliefert wird, um Entzerrungskennlinien für dieses digitale Signal auf der Basis des Modus-Steuersignals einzustellen.

2. Digitale Datenwiedergabevorrichtung (10), mit:
einem Magnetkopf (3) und einem Wiedergabeverstärker (4), die seriell verbunden sind zur Herleitung eines digitalen Signals von einem magnetischen Aufzeichnungsmedium (3);
einer Taktwiedergewinnungsschaltung (8), die mit dem digitalen Signal beliefert wird, um ein wiedergewonnenes Taktsignal zu erzeugen;
einer Demodulationseinrichtung (9), die mit dem digitalen Signal und dem wiedergewonnenen Taktsignal beliefert wird, um demodulierte digitale Daten aus dem digitalen Signal herzuleiten;
einer Ermittlungseinrichtung (13 - 17), zur Erzeugung eines Modus-Steuersignals, das einen Aufzeichnungs-Modulationsmodus des digitalen Signals darstellt; und
einer Steuereinrichtung (12) zur Steuerung der Betriebsmoden der Demodulationseinrichtung (9) auf der Grundlage dieses Modus-Steuersignals;
dadurch gekennzeichnet, daß
die Ermittlungseinrichtung (21 bis 24) eine Referenzspannungsquelle (23), eine Frequenz-Spannungs-Umsetzungseinrichtung (21), die mit dem wiedergewonnenen Taktsignal beliefert wird, und eine Spannungsvergleichseinrichtung (22) aufweist, wobei die Ausgangsspannung, die die Frequenz des wiedergewonnenen Taktsignals darstellt, mit der Referenzspannung in der Spannungsvergleichseinrichtung (22) verglichen wird, wobei dieses Modus-Steuersignal in Abhängigkeit vom Ausgangssignal der Frequenzvergleichseinrichtung erzeugt wird;
die Demodulationseinrichtung (9) zwei Demodulatoren (9A, 9B) aufweist jeweils entsprechend zu den verschiedenen Moden der Aufzeichnungsmodulation des digitalen Signals, das unterschiedliche Aufzeichnungsdensitäten aufweist;
die Steuereinrichtung (12) einen dieser Demodulatoren (9A, 9B) in Abhängigkeit von diesem Modus-Steuersignal auswählt; und
die Vorrichtung eine Entzerrereinrichtung (5A, 5B) aufweist, die zwischen dem Wiedergabeverstärker (4) und der Taktwiedergewinnungsschaltung (8) geschaltet ist, an die dieses Modussteuersignal ebenfalls geliefert wird, um Entzerrungskennlinien für dieses digitale Signal auf der Basis des Modus-Steuersignals einzustellen.

## Revendications

1. Dispositif de reproduction de données numériques (10) comprenant :
- une tête magnétique (3) et un amplificateur de reproduction (4) montés en série pour dériver un signal numérique d'un support d'enregistrement magnétique (3);
- un circuit de restauration d'horloge (8) recevant ledit signal numérique pour générer un signal d'horloge restauré;
- un moyen de démodulation (9) recevant ledit signal numérique et ledit signal d'horloge restauré pour dériver des données numériques démodulées dudit signal numérique;
- des moyens de détection (13 à 17) comprenant des moyens de génération de signal de référence (15, 16) pour générer un signal de commande de mode représentant un mode de modulation d'enregistrement dudit signal numérique; et
- un moyen de commande (12) pour commander les modes de fonctionnement dudit moyen de démodulation (9) sur la base dudit signal de commande de mode;
dispositif caractérisé en ce que :
- lesdits moyens de détection (13 à 17) comprennent un moyen de comparaison de fréquence (14) dans lequel la fréquence dudit signal d'horloge restaurée est comparée à la fréquence dudit signal de référence généré par lesdits moyens de génération de signal de référence (15, 16) dans ledit moyen de comparaison de fréquence (14), ledit signal de commande de mode étant généré en réponse à l'existence d'une composante de battement dans la sortie dudit moyen de comparaison de fréquence (14);
- ledit moyen de démodulation (9) comprend deux démodulateurs (9A, 9B) correspondant respectivement aux différents modes de modulation d'enregistrement dudit signal numérique présentant différentes densités d'enregistrement;
- ledit moyen de commande (12) choisit un desdits démodulateur (9A, 9B) en réponse audit signal de commande de mode; et
en ce que le dispositif comprend des moyens d'égalisation (5A, 5B) montés entre ledit amplificateur de reproduction (4) et ledit circuit de restauration d'horloge (8), moyens auxquels ledit signal de commande de mode est fourni, de même, pour régler la caractéristique d'égalisation dudit signal numérique sur la base dudit signal de commande de mode.

2. Dispositif de reproduction de données numériques (10) comprenant :
- une tête magnétique (3) et un amplificateur de reproduction (4) montés en série pour dériver un signal numérique à partir d'un support d'enregistrement magnétique (3);
- un circuit de restauration d'horloge (8) recevant ledit signal numérique pour générer un signal d'horloge restauré;
- un moyen de démodulation (9) recevant ledit signal numérique et ledit signal d'horloge restauré pour dériver des données numériques démodulées dudit signal numérique;
- des moyens de détection (13 à 17) pour générer un signal de commande de mode représentant un mode de modulation d'enregistrement dudit signal numérique; et
- un moyen de commande (12) pour commander les modes de fonctionnement dudit moyen de démodulation (9) sur la base dudit signal de commande de mode;
dispositif caractérisé en ce que :
- lesdits moyens de détection (21 à 24) comprennent une source de tension de référence (23), un moyen de conversion de fréquence en tension (21) recevant ledit signal d'horloge restauré et un moyen de comparaison de tension (22), moyen dans lesquels la tension de sortie représentant la fréquence dudit signal d'horloge restauré est comparée à ladite tension de référence dudit moyen de comparaison de tension (22), ledit signal de commande de mode étant généré en réponse à la sortie du moyen de comparaison de fréquence;
- ledit moyen de démodulation (9) comprend deux démodulateurs (9A, 9B) correspondant respectivement aux différents modes de modulation d'enregistrement dudit signal numérique présentant différentes densités d'enregistrement;
- ledit moyen de commande (12) choisit un desdits démodulateurs (9A, 9B) en réponse audit signal de commande de mode; et
en ce que le dispositif comprend des moyens d'égalisation (5A, 5B) montés entre ledit amplificateur de reproduction (4) et ledit circuit de restauration d'horloge (8), moyens recevant, de même, ledit signal de commande de mode de façon à régler la caractéristique d'égalisation dudit signal numérique sur la base dudit signal de commande de mode.
